Europäisches Patentamt

European Patent Office

Office européen des brevets

(11) Publication number: **0 330 926**
**A2**

## (12) EUROPEAN PATENT APPLICATION

(21) Application number: **89102707.0**

(22) Date of filing: **17.02.89**

(51) Int. Cl.⁴: **C08L 101/00 , H01B 3/30 , //(C08L101/00,27:12)**

(30) Priority: **04.03.88 JP 52243/88**

(43) Date of publication of application:
**06.09.89 Bulletin 89/36**

(84) Designated Contracting States:
**CH DE FR IT LI SE**

(71) Applicant: **JUNKOSHA CO. LTD.**
**25-25, Miyasaka 2-chome**
**Setagaya-ku Tokyo 156(JP)**

(72) Inventor: **Hoshiko, Takeshi**
**20-18, Azumi-machi 4-chome**
**Koganei-shi Tokyo(JP)**

(74) Representative: **Kehl, Günther, Dipl.-Phys. et al**
**Patentanwälte Hagemann & Kehl Ismaninger Strasse 108 Postfach 86 03 29**
**D-8000 München 86(DE)**

(54) Composite material of low permittivity.

(57) Composite material of low permittivity consisting of a base material comprising polymer material and particles of thermofusing fluororesin dispersed therein.

EP 0 330 926 A2

## COMPOSITE MATERIAL OF LOW PERMITTIVITY

The present invention relates to low permittivity composite material the electric characteristics and other properties of which are improved by dispersing hollow fluororesin particles in a base material comprising polymer material.

While various types of plastic and rubber have been in use as insulating material for a long time, it was recently proposed to mix microscopic, hollow balls of glass or silica in which nitrogen gas, carbonic acid gas or some other gas is included with insulating material as stated above with the aim to improve the electric characteristics of the insulating material by the use of these low permittivity fillers. (Refer to Japanese Patent Laid-Open Nos. 62-48710 and 62-48711.)

Since these microscopic hollow balls are hard by nature of their material, however, mixing them in soft insulating material substantially reduces the softness of the insulating material as the base material, and its resultant fragility poses a problem. It is also conceivable to use microscopic hollow balls of plastic instead of glass ones. Nevertheless, the use of plastic microscopic hollow balls gives rise to another problem. That is to say, since the conventional method of manufacturing microscopic hollow balls heavily depends on the workability for molding (fusing viscosity, melting point, etc.) of resin which serves as the base material, such material as fluororesin which is not so good in workability for molding despite its excellent properties is hard to be made into hollow particles. Accordingly, those available are made of a very limited number of materials including vynilidene chloride-acrylonitril copolymer.

Still, microscopic hollow balls made of it have a problem in heat resistance due to a low melting point of material. Another drawback of this material is that it is easily affected by organic solvents. Therefore it has many restrictions in the manufacturing process and in conditions for its subsequent use when mixed with insulating material like plastic. Thus, the conventional composite material using microscopic hollow balls made of glass and plastic have the respective problems to be solved. In view of these problems of the conventional compound material using microscopic hollow balls, the present invention aims to provide low permittivity composite material which in use is capable of maintaining softness satisfactorily when soft polymer material is used as the base material.

In order to achieve the above object, according to one aspect of the invention, low permittivity composite material is composed by mixing ground thermofusing fluororesin foamed body with polymer material.

Further, according to another aspect of the invention low permittivity composite material is composed by causing ground thermofusing fluororesin containing a foaming agent still to foam therein to foam in polymer material.

According to one aspect of the present invention, the permittivity of thermofusing fluororesin foam which can be manufactured by a publicly-known method is lowered substantially due to a large number of bubbles existing within it. Particles obtained when the foamed body is ground are hollow and also contain bubbles inside them. When these particles are mixed with polymer material such as rubber or plastic, the overall permittivity lowers and a low permittivity composite material is produced. As these hollow particles are made of fluororesin which is highly resistant to heat and chemicals, they remain unaffected by heat, an organic solvent and the like during the manufacturing process and in subsequent use and so they make composite material which is extremely easy to use. Besides, these hollow particles are not hard by nature of their material. Therefore, there is hardly a case in which the softness of the composite material deteriorates after molding.

According to another aspect of the invention, thermofusing fluororesin containing a foaming agent still to foam therein is ground and after the thermofusing fluororesin particles are mixed with polymer material, they are caused to foam. This makes a large number of low permittivity hollow fluororesin particles exist inside the polymer material. As a result the overall permittivity lowers and a low permittivity composite material is produced. Generally speaking, chemical foaming agents tend to be decomposed by water, organic solvents and the like, and are unable to be used in a manufacturing process in which these exist. In the present invention, however, the foaming agent is covered by highly chemical-resistant thermofusing fluororesin and so, if the polymer material to be used as the base material is, for example, ethylene tetrafluoride resin which requires an organic solvent in the molding process, the contact with these liquids is prevented so effectively that it can avoid being decomposed before it is processed for molding, and it is possible to cause foaming reliably.

The low permittivity composite material according to the present invention is described further by way of embodiments.

Experimental Examples 1-3

A foamed body of tetrafluoroethylene-perfluoroalkylvinylether copolymer resin at a foaming rate of 60% was mechanically ground and formed into hollow particles containing bubbles within. By the use of the resultant thermofusing fluororesin particles, ethylene tetrafluoride resin added with foamed particles at varied compound ratios was formed into sheets and their permittivities were measured. The results are as shown in the following table.

|  |  | Experimental Examples | | |
|---|---|---|---|---|
|  |  | 1 | 2 | 3 |
| Composition | Ethylene tetrafluoride | 6 0 | 4 0 | 2 0 |
|  | Foam particles | 4 0 | 6 0 | 8 0 |
| Permittivity | | 1.76 | 1.61 | 1.31 |

As shown in the table, the composite material according to the present invention showed lower permittivities as the compound ratio of foam particles increased. No change in heat resistance and chemical resistance was observed. Of mechanical properties, the softness rather improved. Nearly the same tendencies were seen when other polymer material than ethylene tetrafluoride resin was used as the base material.

In the experimental examples, the thermofusing fluororesin foamed particles were made by grinding thermofusing fluororesin foamed body which was caused to foam by a physical foaming method to blow in a gas such as chlorofluorocarbon or a chemical foaming method using a chemical foaming agent, into particles mechanically by the use of a grinder like a jet mill.

It is preferable that the ground particles have a diameter which is at least more than twice the bubble diameter of the foam so as to keep an independent bubble in a complete form inside each particle. Besides the resin used in the experimental examples, ethylene tetrafluoride-propylene hexafluoride copolymer resin, ethylene-ethylene tetrafluoride copolymer resin, ethylene-ethylene chloride trifluoride copolymer resin and the like are possible to be used as thermofusing fluororesin. Their foaming rates and bubble diameters are chosen suitably for the purpose of using the composite material and the kind of polymer material to serve as the base material.

As a foaming agent to be used for chemical foaming, a high decomposition temperature is required because of a high melting point of thermofusing fluororesin. For instance, Ficel TNT (Fison Inc.), Ficel AF-100 (Fison Inc.), Expandex 150 (Olin Inc.), and Celogen HT-550 (Uniroyal Inc.) can be cited. Further, to add boronnitride, carbon fluoride or the like as a foaming assistant (a foaming core former) to improve the foaming capability is helpful.

Next, low permittivity compound material according to the other aspect of the invention is described.

A mixture of ethylene tetrafluoride-propylene hexafluoride copolymer resin as thermofusing fluororesin added with a chemical foaming agent and a foaming assistant cited above was extrusion-molded into rods at a temperature below the decomposition temperature of the foaming agent and was ground into particles by the use of a grinder. The thermofusing fluororesin particles containing the foaming agent inside it was added to and mixed with powder of ethylene tetrafluoride resin to serve as the base material. After preforming it by publicly-known method, it was burned. In the process of burning, the thermofusing fluororesin particles foam to be hollow particles, and as a consequence, a large number of bubbles are formed inside the plastics of ethylene tetrafluoride resin. In this case, since the chemical foaming agent is covered with thermofusing fluororesin, the foaming agent is not decomposed by heat without fail during the burning to cause the thermofusing fluororesin particles to foam. As the chemical foaming agent, one of those cited in describing the experimental examples is used. Like the aforementioned experimental examples, other thermoplastic or thermosetting resin or rubber may be used as polymer material to serve as the base material, besides ethylene tetrafluoride resin.

The composite material thus obtained showed a fall in the permittivity in proportion to a rise in the compound ratio of thermofusing fluororesin particles in the same manner as the above-mentioned experimental examples. There was no decline in the heat resistance, chemical resistance and the like while the

3

softness improved.

As described above, according to the invention, low permittivity thermofusing fluororesin in the form of hollow particles is dispersed in the base material comprising polymer material. Therefore, the permittivity can be set at a desired level by selecting low permittivity material, a suitable compound ratio of thermofusing fluororesin particles and other conditions, and the resultant composite material is ideal for use as insulating material.

Moreover, hollow particles comprising thermofusing fluororesin are soft by nature of the material and so the composite material is not hard nor fragile unlike the composite material in which microscopic hollow balls made of glass are used. On top of that, being excellent in heat resistance and chemical resistance, it is impervious to heat, an organic solvent and others in the process of molding the composite material and while in use, its stable properties are maintained.

## Claims

1. Composite material of low permittivity characterized in that it consists of a base material comprising polymer material and particles of thermofusing fluororesin dispersed therein.

2. Composite material according to claim 1 characterized in that the particles of thermofusing fluororesin are obtainable by grinding a foamed body of thermofusing fluororesin.

3. Composite material according to claim 1 or 2, characterized in that said thermofusing fluororesin is selectred from the group of tetrafluoroethylene-perfluoroalkylvinylether-copolymer, ethylene tetra fluoride propylene hexafluoride copolymer-resin, ethylene-ethylene tetrafluoride copolymer resin and ethylene-ethylene chloride trifluoride copolymer resin.

4. Composite material according to claim 1 or 2 characterized in that said base material is rubber or plastic.

5. Composite material according to anyone of claims 1-3, characterized in that said base material is ethylene tetrafluoride resin.

6. Composite material according to claim 2 and anyone of claims 3-5, characterized in that the average diameter of the particles of said thermofusing fluororesin material is more than twice the average bubble diameter of the foamed body.

7. Composite material according to claim 2 and anyone of claims 3-6, characterized in that the ground thermofusing fluororesin material contains a foaming agent which has been caused to foam after the ground thermofusing fluororesin has been mixed with the polymer material.

8. Composite material according to claim 7, characterized in that the foaming agent is covered by the thermofusing fluororesin.

9. Composite material according to claims 7 or 8 characterized in that the foaming agent is heat resistant.

10. Method for the production of a composite material according to anyone of claims 1-9, characterized in that a foamed body of thermofusing fluororesin material is ground and mixed with powder of polymer-material which mixture is then preformed.

11. Method according to claim 10, characterized in that said foamed body of thermofusing fluororesin contains a foaming agent.

12. Method according to claim 11, characterized in that said mixture of thermofusing fluororesin material and polymermaterial is caused to foam by means of the foaming agent.

13. Method according to claim 11, characterized in that the mixture is caused to foam by burning.